Europäisches Patentamt

European Patent Office

Office européen des brevets

(19)

(11) **EP 1 203 931 A1**

(12) **EUROPEAN PATENT APPLICATION**

(43) Date of publication:
**08.05.2002 Bulletin 2002/19**

(51) Int Cl.⁷: **G01C 21/36**

(21) Application number: **00124109.0**

(22) Date of filing: **06.11.2000**

(84) Designated Contracting States:
**AT BE CH CY DE DK ES FI FR GB GR IE IT LI LU
MC NL PT SE TR**
Designated Extension States:
**AL LT LV MK RO SI**

(71) Applicant: **Sony International (Europe) GmbH
10785 Berlin (DE)**

(72) Inventor: **Hagg, Wilhelm,
c/o Sony International (Eur.) GmbH
70327 Stuttgart (DE)**

(74) Representative: **Müller . Hoffmann & Partner
Patentanwälte
Innere Wiener Strasse 17
81667 München (DE)**

(54) **Navigation system**

(57)     An information terminal and a method for displaying at least one point of interest within the information terminal in accordance with a numerical order, wherein said numerical order of a plurality of points of interest (1-4) is dependent on a distance (d) between a variable position of the information terminal and a respective point of interest, a significance value (s) of the respective point of interest (1-4) and possibly a zooming factor of the information terminal. Therewith, an adaptive filtering mechanism is proposed to sort and order points of interest (1-4) according to their relevance which is dependent on their significance and reachability and additionally dependent on the zooming factor, i. e. the weighting of significance and reachability. Further, the weighting of a combination of distance (d) and significance (s) is used to determine whether a point of interest (1-4) is displayed within the information terminal or not.

FIG. 2

## Description

The present invention relates to the field of navigation systems. More particularly, the present invention relates to the displaying of a possible destination to a user, i. e. to an information terminal and a method for displaying a limited number of a plurality of geographical items or categories of geographical items within an information terminal.

Conventional navigation systems mainly used in automotive applications are based on Global Positioning System (GPS)-data received via satellites, speedometer data and geographical data provided in digital road maps which may be stored e. g. on a CD-ROM. With respect to a selected destination, and in accordance with different criteria such as distance, part of town and/or actual traffic information by which a dynamic navigation is possible, a conventional navigation system determines e. g. a shortest route or a fastest route to reach the selected destination.

An input of the destination to be selected for the navigation system may be carried out e. g. via a touch screen or a keyboard. With regard to the input of a derived destination, a search of different points of interest is possible according to "a yellow page mode" sorting by categories with respect to a specific city or according to "a white page mode" sorting by name if the name of a respective point of interest is known in advance. For example, such points of interest may be airports, filling stations or restaurants. The input of a destination may be further facilitated by providing a memory for a plurality of predetermined destinations and/or for a number of destinations most recently selected.

It is common for conventional navigation systems to output a guidance to the selected destination by acoustic or optical means. For example such optical means may be a display showing a road map with variable scales or showing arrow symbols leading to the selected destination.

US 5,987,375 describes a method or apparatus for selecting a destination in a vehicle navigation system which maintains a list of the most recently selected destinations from any particular destination category presented at the beginning of the destination list for each such category to allow the user to highlight and select any of these destinations with a minimum of cursor movement. Further, a feature by which the system may search for a destination across categories is also included. The current position of the vehicle is selected from a map database which comprises positional data such as for example, latitude and longitude coordinates, to describe road intersections, road segments, landmarks and points of interest, and other geographical information. A destination list is based on an alphabetical organization of all available items and includes a destination history list, i. e. the most recently selected items, at the beginning.

US 5,115,399 describes a position input system for a vehicular navigation apparatus which makes it possible to enter the current position in a simple and accurate way. Therein, the current position is selected from pre-stored information relating to geographical locations. It is further possible to combine said navigation apparatus with a distance sensor in order to provide information relating to the distances between geographical points at which guidance is given, wherein the next geographical point is identified automatically.

US 4,677,562 describes an automotive navigation system in which geographical names and geographical positions of points as well as the declination of the earth magnetism of said points are stored. Said automotive navigation system corrects a vehicle heading according to a geographical reference which is the closest to a current position of the vehicle.

It is an object underlying the present invention to provide a method and an information terminal for facilitating a choice of points of interest displayed within said information terminal.

This object is solved by a method for displaying a limited number of a plurality of geographical items or categories of geographical items within an information terminal according to claim 1 and 7, respectively, as well as an information terminal for displaying a limited number of a plurality of geographical items or categories of geographical items according to claim 15. Preferred embodiments are defined in dependent claims 2 to 6, 8 to 10, 11 to 15 and 17 to 18, respectively.

A method according to a first embodiment of the present invention for displaying a limited number of a plurality of geographical items or categories of geographical items within an information terminal comprises the step of selecting the items to be displayed, based on a distance between an item to be displayed and a variable position of the information terminal, and based on a level of significance of said item to be displayed. Alternatively, said method comprises the step of selecting the categories to be displayed, based on a distance between an item of a category to be displayed and a variable position of the information terminal, and based on a level of significance of said category to be displayed.

Further, the object of the present invention is solved by a method according to a second embodiment of the present invention for displaying a limited number of a plurality of geographical items or categories of geographical items within an information terminal which comprises the steps of visualizing a distance between a variable position of the information terminal and either an item to be displayed or an item of a category to be displayed, and visualizing a level of significance of said item to be displayed or said category to be displayed, wherein both said distance and said level of significance are indicated by a position at which the item or category is shown on a display of said information terminal, whereas a horizontal or vertical position indicates the distance and a vertical or horizontal position indicates the significance value.

Still further, the object of the present invention is solved by an information terminal for displaying a limited number of a plurality of geographical items or categories of geographical items, wherein said information terminal comprises a display having a diagram. In said diagram an entry assigned to a respective item to be displayed is indented with respect to at least one axis of the diagram in accordance with a distance or its reciprocal between said respective item and a variable position of the information terminal and/or with respect to a level of significance or its reciprocal of said respective item. Alternatively, or in addition, in said diagram an entry assigned to a respective category to be displayed is indented with respect to at least one axis of the diagram in accordance with a distance or its reciprocal between an item of said respective category and a variable position of the information terminal and/or with respect to a level of significance or its reciprocal of said respective category .

With respect to the method of the first embodiment according to the present invention, said geographical items and/or said categories of geographical items may be displayed in form of a list or a hierarchical tree which is shown on a screen connected to said information terminal.

Nevertheless, it is to be understood that data of a limited number of items and/or categories of said items which is selected in accordance with the method of the first embodiment of the present invention may not be directly shown on said screen, but may be first provided as output data to be transmittable to another device which is part of or connected to the information terminal.

Preferably, said step of selecting the category to be displayed is preferably based on the distance of an item of said category which is located nearest to said variable position of said information terminal.

Further preferably, a zooming factor is appointed for displaying the geographical items or categories. In case of a small zooming factor, only items or categories having a high level of significance located in a large area around the variable position of the information terminal are displayable. Contrary, in case of a large zooming factor, items or categories having a small level of significance located in a small area around the variable position of the information terminal are displayable.

With respect to an information terminal used together with the method according to the first embodiment of the present invention, a list of points of interest shown on a display within said information terminal is limited by a size of said display. By increasing said zooming factor the user is provided with a "zooming-in function" which results in the displaying of points of interest located in the direct environment of the information terminal which may have a lower level of significance. On the other hand, a decrease of the zooming factor leads to a concentration on points of interest which are quite far away from the variable position of the information terminal.

Still further preferably, the method according to the first embodiment of the present invention selects the items to be displayed or categories to be displayed based on a numerical order of all items to be displayed or categories to be displayed which is defined by a measure

$$m = f (Z, d, s)$$

wherein m denotes the measure, Z denotes the zooming factor with $0 \leq Z \leq 1$, d denotes the distance between an item to be displayed and the variable position of the information terminal or the distance between an item of a category to be displayed and the variable position of the information terminal, and s denotes the level of significance. Further, the items to be displayed or categories to be displayed are selected in accordance with an increasing or decreasing value of the measure m. By way of example, only those items or categories may be selected for displaying which have the smallest value of the measure m. In other words, a respective item to be displayed or a respective category to be displayed is selected dependent on a value of the measure m.

With respect to the above, the measure m may be defined by any kind of relation.

Still further preferably, the measure m may be determined by the following equation:

$$m = Z*d + (1 - Z)*1/s.$$

The method for selecting said items to be displayed or categories to be displayed may be illustrated in a diagram in which said items or categories are displayed dependent on said distance d between an item to be displayed and the variable position of the information terminal or the distance d between an item of a category to be displayed and the variable position of the information terminal, the level of significance s of said item to be displayed or category to be displayed, and on the zooming factor Z. As for example, in said diagram a reciprocal of the significance s may be layed off as abscissa and the distance d may be layed off as ordinate.

In this context, the above equation m = Z*d + (1 - Z)*1/s for determining the measure m, which is referred to as weighted sum in the following, represents a simple case of a straight line which is spawn by the distance d and the reciprocal of the significance 1/s. Of course, any other formula representing a more complex relation may be used herein.

For example, a display may comprise a predetermined number of lines in which an information entry can be displayed. In this case, a number of respective items or categories, which are referred to as "points of interest" in the following, is displayed in accordance with said predetermined number of lines, wherein the value of the measure m and the weighted sum, respectively, of a respective point of interest determines whether said point of interest is displayed or not. More particularly, said exemplary display may comprise four lines in which an information entry can be displayed. Correspondingly, four points of interest are chosen to be displayed which have e.g. the four smallest values of the measure m.

Still further preferably, points of interest with the lowest weighted sum m are of most interest for the user and are therefore probably shown in a list on a display within the information terminal. In practical use of said information terminal, points of interest which have been given a high level of significance s are shown even if they are quite far away from the current position of the information terminal. On the other hand, points of interest which are very close to the position of the information terminal might be displayed even if they are not very significant, which depends on the value of the measure m resulting from the equation given above.

In other words, by simply changing the zooming factor Z the method according to the present invention as described above provides a possibility of selecting points of interest according to a zoom mechanism in order to realize the displaying of said point of interest. An increase of Z gives the distance more influence on the selection of points of interest, wherein some points of interest located far away from the current position of the information terminal will disappear from the display of the list due to an increased value of the weighted sum m, while some other points of interest located near the current position of the information terminal will show up on the display. This leads to an advantageous effect that the display of the list becomes more detailed in a near range of the information terminal. This mechanism is similar to a zooming procedure in a comparable map display application.

Still further preferably, the level of significance s of the items to be displayed is calculated based on at least one attribute of said item to be displayed, wherein the level of significance s of the categories to be displayed is calculated based on at least one attribute of said categories to be displayed. The attributes of the items to be displayed and/or the categories to be displayed may be stored by a system of said information terminal. Alternatively, the attributes of the items to be displayed may be stored along said items within a database of said items, wherein the attributes of the categories to be displayed may be stored along said categories within a database of said categories.

With respect to the method according to the second embodiment of the present invention, a distance between a variable position of the information terminal and either an item to be displayed or an item of a category to be displayed is preferably visualized. Further, a level of significance of said item to be displayed or said category to be displayed is visualized, wherein both said distance and said level of significance are indicated by a position at which the item to be displayed or the category to be displayed is shown on a display of said information terminal, whereas a horizontal or vertical position indicates the distance and a vertical or horizontal position indicates the level of significance.

Further preferably, said distance and/or said level of significance are indicated only by an order of said item or said category within a vertical or horizontal stack of items or categories.

Still further preferably, an exact value of said distance and/or said level of significance of said item or category is indicated by using an additional text and/or graphics symbol shown on said display. Thus, next to a qualitative estimation with respect to the positions of said item to be displayed or said category to be displayed, the user is provided with exact information for e.g. the distance.

Preferably, an item to be displayed or a category to be displayed is shown as a text entry wherein a horizontal position of said item or category is given by a vertical indentation of said text.

It is to be understood that the method according to the first embodiment of the invention and the method according to the second embodiment of the present invention, as described above, might be combined with each other in any way for the purpose of a common use within an information terminal.

Further preferably, the method according to the first or second embodiment of the present invention optionally scrolls to geographical items or categories not displayed within the information terminal or switching a complete screen of the information terminal to a next set of items or categories currently not displayed. In other words, if a number of points of interest to be displayed is selected to be larger than the number of said predetermined lines of said display as mentioned above, a scroll bar might pop up in said display in order to scroll-up and scroll-down the display, respectively, for visualizing all the points of interest selected to be displayed on demand.

With respect to the information terminal according to the present invention, said entries may preferably be composed of text entries so as to directly display e.g. the names of an item and/or a category. An advantage of the information terminal according to the present invention is that the clarity of displaying said points of interest is advantageously enhanced due to an indentation of said text entry with respect to at least one axis of the diagram as described above.

With respect to the explanation made above for the method according to the first and second embodiment and the information terminal of the present invention, the variable position of the information terminal is preferably a current position. Further preferably, said current position is continuously determined in order to select an appropriate set of items or categories to display. For example, if the information terminal is provided within a car, a change of position due to a movement of the car can be taken into account so as to continuously update the information supplied to the information terminal. This leads to a selection of geographical items or categories of geographical items reflecting the most current position of e. g. the car. Of course, this example is not limited only to the use of the information terminal in the automotive field.

Alternatively, said variable position may also be a selected position chosen by a user. This allows the user to run a "test-mode" in order to figure out different possibilities for making a choice of a probable destination.

The significance value is usually not chosen by the user. but it is based on significance values assigned to each item or category by the database provider. Alternatively a system of the information terminal may hold significance values which is preferably effectively used with respect to categories of items wherein the level of significance may be calculated as a statistics from previous user selections.

Alternatively, it may also be possible for the user to input individual numbers for the level of significance within the information terminal with respect to an item or category. Thus the user is allowed to set up predetermined values for significance values according to his individual preferences.

A main advantage of the present invention is that while displaying at least one point of interest within the information terminal, the most interesting points of interest are shown e. g. at a top of a list of said points of interest such that there is no need to scroll through long lists which would be time-consuming. In other words, a weighting of a combination of significance and reachability is used to determine whether a point of interest is displayed or not. Furthermore, the present invention advantageously provides the possibility of changing the zooming factor Z for displaying the points of interest, i. e. to "zoom-in" and to "zoom-out".

Therefore, the present invention proposes an adaptive filtering mechanism to sort and order points of interest according to their relevance which is dependent on their significance and reachability and additionally dependent on the zooming factor Z, i. e. the weighting of significance and reachability.

The accompanying drawings which are incorporated in and constitute a part of this specification illustrate an exemplary preferred embodiment of the invention and, in accordance with a general description of the invention given above, and the detailed description of the embodiment given below, serve to explain the principles of the invention, wherein:

**Fig. 1** illustrates a diagram type for selecting points of interest to display dependent on distance, significance and zooming factor according to the present invention;

**Fig. 2** illustrates an example of a diagram type for displaying points of interest according to the present invention;

**Fig. 3** illustrates a further example for displaying points of interest with the diagram type shown in Fig. 2 according to the present invention;

**Fig. 4** illustrates a still further example for displaying points of interest with the diagram type shown in Fig. 2 according to the present invention:

**Fig. 5** illustrates a still further example for displaying points of interest with the diagram type shown in Fig. 2 according to the present invention; and

**Fig. 6** illustrates a still further example for displaying points of interest with the diagram type shown in Fig. 2 according to the present invention.

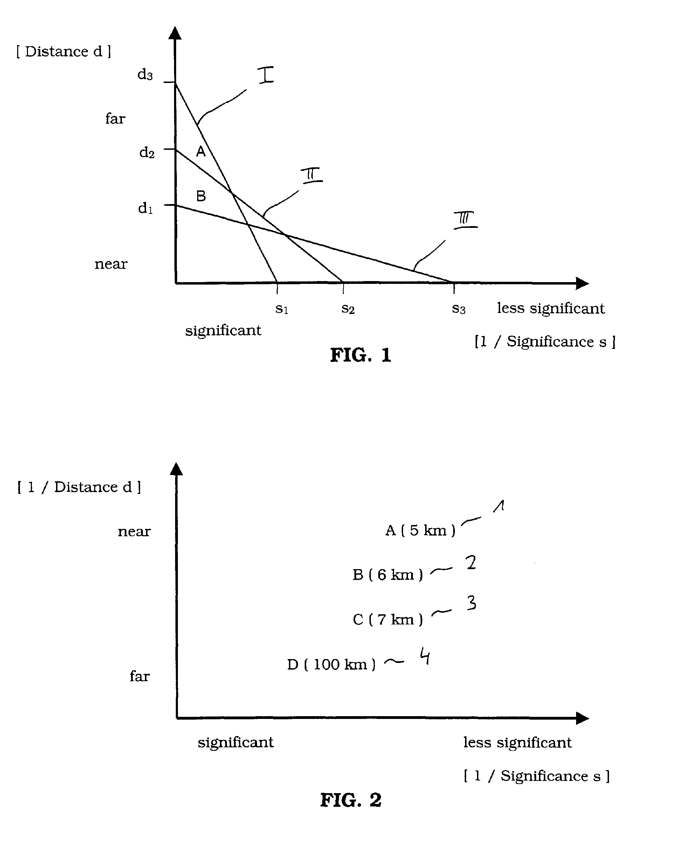

In the following a preferred embodiment of the invention is described by use of the accompanying Figures. However, the invention is not limited to this specific embodiment which is an advantageous realization and, with respect to Figs. 2-6, explains in particular a diagram type according to the present invention by which an item or a category may be displayed. Of course, said diagram type may be modified, e. g. by changing a respective axis definition. In the explanation made below, an item to be displayed or a category to be displayed is generally referred to as a "point of interest".

A diagram shown in Fig. 1 illustrates a selection method for points of interest to be displayed according to the preferred embodiment of the present invention. A point of interest is selectable dependent on a distance d between a variable position of an information terminal and a respective point of interest, a level of significance s of the respective point of interest and on a zooming factor Z. Preferably, said variable position of the information terminal is a current position which is continuously determined so as to update the present position of the information terminal. Alternatively said variable position may also be a selected position chosen by a user. In said diagram shown in Fig. 1, in particular, a reciprocal of the significance s is layed off as abscissa and the distance d is layed off as ordinate.

While setting a numerical order of said points of interest, a measure m, which is referred to as weighted sum in the following, may be determined for each point of interest according to the following equation:

$$m = Z*d + (1 - Z)*1/s,$$

wherein m denotes the weighted sum, Z denotes the zooming factor which is preferably chosen from a range $0 \leq Z \leq 1$, d denotes the distance between a current position of the information terminal and a respective point of interest, and s denotes the level of significance. Further in this example, the numerical order of said points of interest is set in accordance with an increasing value of the weighted sum m. Alternatively, the numerical order may also be set in accordance with a decreasing value of the weighted sum m. As for example, it depends on the value of the weighted sum m whether a point of interest is selectable or not. Further, a maximum number of points of interest may be limited dependent on the value of the weighted sum m.

The diagram of Fig. 1 shows first to third graphs I - III representing a limit for selecting a graphic item assigned to a respective point of interest to be displayed, wherein said first to third graphs I-III are dependent on different zooming factors Z, respectively. The item assigned to a respective point of interest can only be selected for displaying if it lies in a region below a respective first to third graph I-III. In other words, an appropriate choice of the zooming factor Z determines whether a respective point of interest shown in said display is selectable or not. Finally an actual display of respective points of interest in a display of the information terminal is dependent on the value of the weighted sum m, i.e. only points of interest which lie below a respective graph I-III are selected for the displaying.

In detail, three values $s_1$ to $s_3$ are indicated on the abscissa, wherein $s_1$ represents a high significance, $s_2$ a intermediate significance and $s_3$ a low significance. In correspondence with the axis definition of the abscissa by the reciprocal of the significance, $s_1$ is located most left on the abscissa and $s_3$ is located most right, wherein $s_2$ is located in-between thereof.

Similarly, three values $d_1$ to $d_3$ are indicated on the ordinate, wherein $d_1$ represents a small distance, $d_2$ an intermediate distance and $d_3$ a large distance. In correspondence with the axis definition of the abscissa, $d_1$ is located most bottom on the ordinate and $d_3$ is located most top, wherein $d_2$ is located in-between thereof.

The first graph I is a straight line connecting $d_3$ and $s_1$ and represents a limit for a low zooming factor Z. In this particular case, points of interest having a comparable large distance d to the current position of the information terminal are preferably taken into account for the selecting, wherein said points of interest are selectable for the displaying if respective items assigned thereto lie in a region below said first graph I dependent on the parameters distance d and significance s. In other words, the limit defined by the first graph I is to be understood such that in case of a low zooming factor Z, entries assigned to respective points of interest can only be displayed within the information terminal if they are located in the region which is below said first graph I.

Further with regard to an example of said points of interest being located far away from the current position of the information terminal, i.e. having a large value of the distance d, it is to be understood that said points of interest should have a relative high level of significance s, i.e. a small value of the reciprocal of the significance s such that an entry assigned thereto is located "far enough left" so as to lie in the region below the first graph I. If the coordinates with respect to distance d and significance s of said points of interest are such that entries assigned thereto come to lie in the region below said first graph I, e.g. due to a low level of significance s, said entries are not selectable for a displaying within the information terminal.

The first to third graphs I-III shown in Fig. 1 are just examples for a given value of the weighted sum m. The final value of m is determined in such a way that exactly the number of points of interest which can be shown on the display of the information terminal are located below the respective graph. In other words, the value for the weighted sum m is chosen such that the number of points of interest exactly fits the size of a screen of said display.

The second graph II is a straight line connecting $d_2$ with $s_2$ and represents a limit for an intermediate zooming factor Z, wherein further points of interest may be taken into account for the displaying based on an appropriate selection thereof, which are located closer to the current position of the information terminal. An increase of the zooming factor Z results in an decreased amount of the gradient of the second graph II compared with the first graph I. Similar to the explanation made above with respect to the first graph I, said further points of interest can only be selected for a displaying if an entry assigned thereto comes to lie in a region below said second graph II.

Compared to the first graph I, in the case of an intermediate zooming factor Z the further points of interest should have a comparably smaller distance d and may have a comparably lower value of significance s so as to be located in the region below the second graph II in order to be selectable for a displaying. Like in the case of the first graph I, the zooming factor Z is preferably chosen to a value so that at least one point of interest is displayed in said diagram. The other principles with respect to the selecting of the further points of interest are similar to the case of the first graph I such that a more detailed description therefore is omitted.

Still further, the third graph III is a straight line connecting $d_3$ with $s_1$ and represents a limit for an elevated zooming factor Z. In this case, further points of interest may be selected in order to be displayed which are located still closer to the current position of the information terminal as compared e.g. to the case of the second graph II. Similar to the principle of the selecting in the case of the first graph I and the second graph II, respectively, said further points of interest can be only selected if they are located in a region below said third graph III.

Compared to the second graph II, in the case of the elevated zooming factor Z and the third graph III, respectively, said further points of interest should have a comparably smaller distance d and may have a still further decreased level of significance s so as to be located in the region below the third graph III in order to be selectable for a displaying.

The other principles for the selecting of the further points of interest in the case of the elevated zooming factor Z are similar to the cases explained above such that a detailed description thereof is omitted.

By way of example, the diagram of Fig. 1 further shows two entries assigned to a first point A and a second point B, respectively. In the following, reference is made to these first and second points A and B in order to explain the change of the selecting depending on a respective set up of the zooming factor Z.

Both the first point A and the second point B have the same significance s. As for result, the indentation thereof with respect to a vertical axis is identical. Further, the first point A is located far to a current position of the information terminal such that the distance d takes a high value. Still further, the second point B is located relatively near from the current position of the information terminal such that the distance d corresponding thereto takes a small value. As for consequence, the entry assigned to the second point B is located vertically below the entry of the first point A.

In the case of a low zooming factor Z, both the first point A and the second point B are located in a region below the the first graph I. This means that both the first and second point A and B are selectable for a displaying within the information terminal, and thus they can be displayed on the screen of the information terminal.

With respect to the second graph II corresponding to the intermediate zooming factor Z, the entry assigned to the first point A comes to lie in a region above said second graph II. In contrary, the entry assigned to the second point B is still located in a region below the second graph II. According to the explanations made above, this means that in case of a diagram having the intermediate zooming factor Z, the first point A can no longer be selected for a displaying because it lies above the limit defined by the second graph II. As for result, the first point A is not displayed within the information terminal.

In the following, Figs. 2 to 6 are described which illustrate a diagram type for displaying different points of interest, wherein said different points of interest each have a different distance to the position of the information terminal. The significance s is used as a further parameter for organizing the display of points of interest shown in said diagram. Generally, the displaying by means of said diagram shown in the Figs. 2-6 is based on a selection of respective points of interest, which has been explained above with reference to Fig. 1.

For determining the level of significance s of a respective point of interest, a system of the information terminal may take predetermined selection criteria of given lists of categories into account. In addition, or alternatively, the assignment of the level of significance s may also be organized by means of data bases in which individual characteristics of the user, optionally in combination with statistics built from previous selections of the user, may be stored.

Fig. 2 illustrates a diagram comprising four entries assigned to four points of interest, respectively, wherein a first point of interest 1 "A", a second point of interest 2 "B", a third point of interest 3 "C" and a fourth point of interest 4 "D" have a distance to the current position of the information terminal of 5, 6, 7 and 100 km, respectively. With respect to the ordinate representing the reciprocal of the distance d, said first to fourth points of interest 1 - 4 are sorted in a vertical order, wherein the first point of interest 1 "A" is shown in a top position and the fourth point of interest 4 "D" is shown in a lowest position. Further, the display of the four points of interest 1-4 in said diagram is organized depending on the significance thereof, wherein the entries assigned to the respective points of interest 1-4 are vertically indented. For example, the level of significance s of the fourth point of interest 4 "D" is comparatively the highest, leading to an indentation of said point of interest most left in said diagram. Further, a same level of significance is assigned to the second and third point of interest 2 "B" and 3 "C", respectively, leading to a display of said points of interest identically flush left. Still further, the first point of interest 1 "A" comprises the lowest level of significance s leading to a display most right in said diagram with respect to a vertical axis.

In accordance with the numerical order mentioned above with respect to the value of the weighted sum m, the maximum number of entries in the example of the diagram shown in Fig. 2 is limited to four. Said maximum number of four is chosen adapted e.g. to the size of the display, i.e. to the maximum number of lines available in said display. Of course, it is possible to determine a different maximum number of entries assigned to the points of interest selected to be displayed in the diagram. For example, if the maximal number of entries assigned to the points of interest selected to be displayed exceeds the available number of lines of the display, a scroll bar might pop up in the display in order to provide a visualization of all entries assigned to respective points of interest on demand.

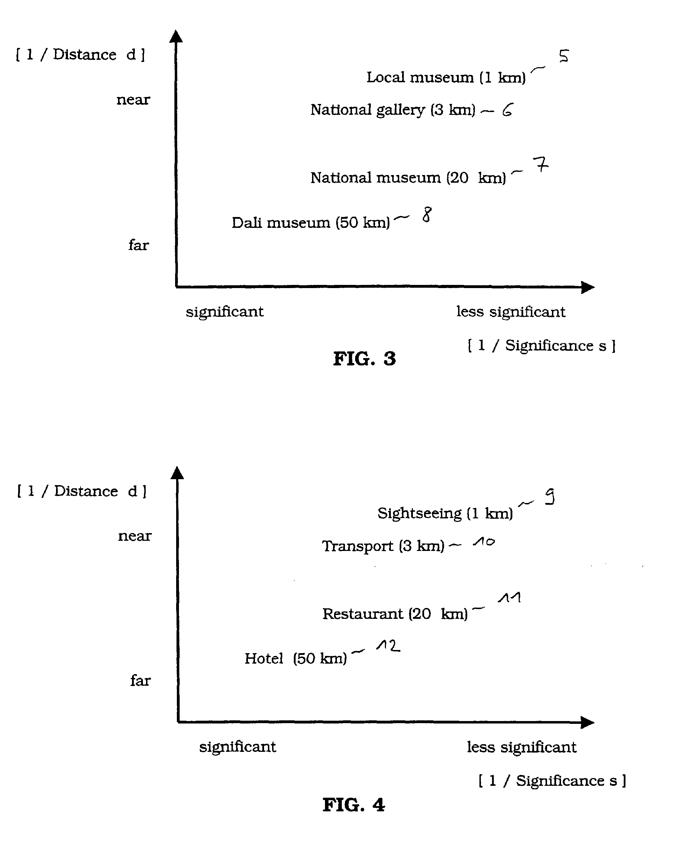

Similar to Fig. 2, Fig. 3 illustrates a further example of the displaying of points of interest by means of the type of diagram explained above. In the diagram of Fig. 3, entries assigned to points of interest consist of text entries relating to a category "museum". In particular, the diagram of Fig. 3 shows entries assigned to a fifth point of interest 5 "Local museum", a sixth point of interest 6 "National gallery", a seventh point of interest 7 "National museum" and an eighth point of interest 8 "Dali museum", which have a distance d to the current position of the information terminal of 1, 3, 20 and 50 km, respectively. Similar to the display shown in the diagram of Fig. 2, the fifth to eighth points of interest 5-8 of this example are sorted in a vertical order depending on their respective distance, wherein an indentation thereof with respect to a vertical axis is organized depending on their respective level of significance.

Similar to displaying different entries relating to one kind of category, it is also possible to display items assigned to points of interest relating to different categories, which makes a selection of an appropriate category of points of interest very comfortable. An example thereof is given in Fig. 4 which illustrates a diagram showing four text entries assigned to a ninth point of interest 9 "Sightseeing", a tenth point of interest 10 "Transport", an eleventh point of interest 11 "Restaurant" and a twelfth point of interest 12 "Hotel", which have a distance d to the current position of the information terminal of 1, 3, 20 and 50 km. respectively. Said ninth to twelfth points of interest 9-12 are displayed similarly to the example shown in Figs. 2 and 3, respectively, with respect to their vertical order and the indentation along a vertical axis, respectively. As for example, the twelfth point of interest 12 "Hotel" is displayed most below because it has the largest distance to the current position of the information terminal compared to the three other points of interest 9 to 11. Further, said twelfth point of interest 12 "Hotel" is indented most left in the diagram of Fig. 4 because it comprises the highest level of significance. By means of this organization of points of interest depending on a combination of distance d and significance s as explained above, it is very comfortable for the user to recognize a respective point of interest which he is most interested in at first glance.

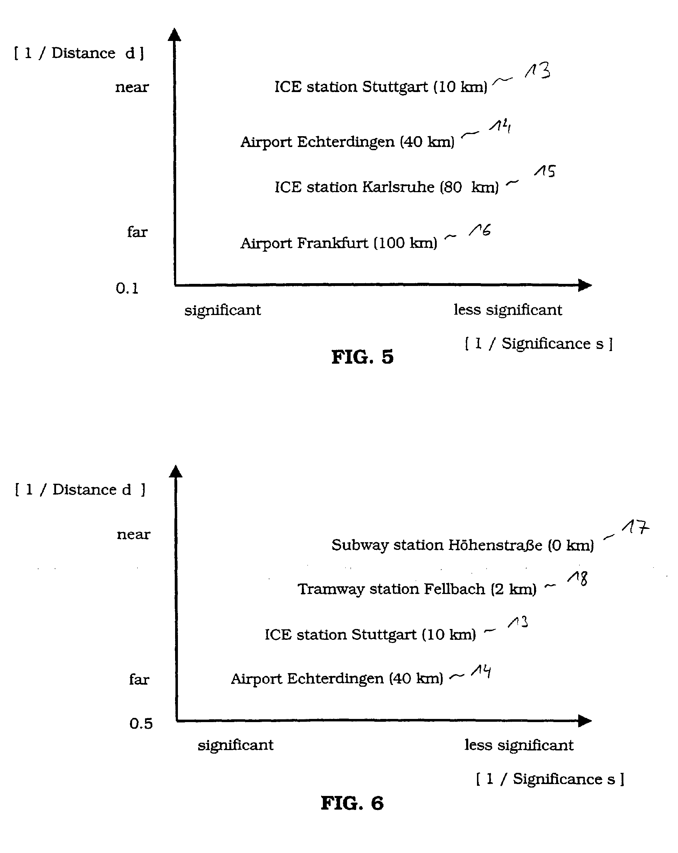

For the displays shown in the diagrams of Figs. 2 to 4 as explained above, the zooming factor Z corresponding thereto is assigned to a predetermined value, wherein an effect of changing the zooming factor Z has not been discussed in connection therewith. The following Figs. 5 and 6 describe an example of displaying different transport facilities in order to explain a zooming capability, wherein a change of the zooming factor Z leads to a change of said display. In particular, a change of the zooming factor Z, i. e. increasing and decreasing the zooming factor Z, provides a function of "zooming-in" and "zooming-out", respectively, in the diagram showing a plurality of points of interest, wherein a selection and/or a number of points of interest shown in said diagram is directly influenced by an appropriate zooming factor Z, as will be explained below.

Fig. 5 describes a further example of a diagram which is similar to the type of diagram explained above with reference to Fig. 2. The diagram illustrated in Fig. 5 displays four text entries assigned to a thirteenth point of interest 13 "ICE station Stuttgart", a fourteenth point of interest 14 "Airport Echterdingen", a fifteenth point of interest 15 "ICE station Karlsruhe" and a sixteenth point of interest 16 "Airport Frankfurt", respectively, which have a distance d to the current position of the information terminal of 10, 40, 80 and 100 km, respectively. Depending on the respective distance d, the thirteenth to sixteenth points of interest 13 - 16 are sorted in a vertical order. As for example, the sixteenth point of interest 16 "Airport Frankfurt" is arranged at a position most below in the diagram of Fig. 5, because it is located more far away from the current position of the information terminal (i. e., 100 km) than the thirteenth to fifteenth points of interest 13-15, respectively (i.e. 10 km, 40 km and 80 km, respectively). Further, both the two ICE stations on the one hand, and both the Airports on the other hand, have the same level of significance. As for consequence, the text entries assigned to the thirteenth point of interest 13 and the fifteenth point of interest 15, respectively, have the same indentation with respect to a vertical axis. Still further, the text entries assigned to the fourteenth point of interest 14 and the sixteenth point of interest 16 are also identically indented with respect to a vertical axis.

The zooming factor Z which is chosen for the diagram shown in Fig. 5 is indicated in a left bottom corner thereof, wherein the value of 0.1 is assigned to the zooming factor Z in this example. As can be derived from the equation for the weighted sum m mentioned above, since the zooming factor Z is quite small for this example, only the important transport facilities are displayed in said diagram even if they have a comparatively large distance d to the current position of the information terminal.

Fig. 6 illustrates a modification of the diagram shown in Fig. 5, wherein the zooming factor Z has been increased up to a value of 0.5 as indicated in the bottom left corner of said diagram. The diagram of Fig. 6 displays text entries assigned to a seventeenth point of interest 17 "Subway station Höhenstrasse", an eighteenth point of interest 18 "Tramway station Fellbach", the thirteenth point of interest 13 "ICE station Stuttgart" and the fourteenth point of interest 14 "Airport Echterdingen", respectively, which have a distance to the current position of the information terminal of 0, 2, 10 and 40 km, respectively. The four text entries are sorted according to the distance d of the respective point of interest to the current position of the information terminal. Further, said four text entries assigned to the seventeenth point of interest 17, the eighteenth point of interest 18, the thirteenth point of interest 13 and the fourteenth point of interest 14 are vertically indented one more to the left than the other, in this order. As for example, the Airport Echterdingen is indented most left because its level of significance s is higher than the level of significance with respect to the three other points of interest 17, 18 and 13.

In comparison with the diagram of Fig. 5, one can notice that the diagram shown in Fig. 6 displays the points of interest "Subway station Höhenstrasse" and "Tramway station Fellbach", both having only a very small distance d to the current position of the information terminal, i. e. 0 km and 2 km, respectively, in place of the "ICE station Karlsruhe" and the "Airport Frankfurt", having a large distance d of 80 km and 100 km, respectively, to the current position of the information terminal.

In other words, an increase of the zooming factor Z results in a concentration on the direct environment of the information terminal in order to show less important points of interest. In said example, less important transportation facilities, i. e. a Subway station or a Tramway station, are shown in Fig. 6 instead of generally more important points of interest like an ICE station or an Airport. By increasing the zooming factor Z, these important points of interest being far away from the current position of the information terminal disappear, while other points of interest located near the position of the information terminal, which are less significant, are selected to be displayed in the diagram.

By way of the example explained above with reference to the Figs. 5 and 6, it is clear that the zooming factor Z has a direct influence on the selection of points of interest which are displayed to the user by means of said diagram within the information terminal. According to the equation for the weighted sum m as mentioned above, a small zooming factor Z preferably results in displaying a point of interest which has an increased level of significance s and probably a large distance d, wherein an enlarged zooming factor Z results in a change of the displaying of points of interest such that an important point of interest may disappear and a less important point of interest located nearer to the current position of the information terminal is selected to be displayed within said information terminal.

**Claims**

1. Method for displaying a limited number of a plurality of geographical items (1-8: 13-18) or categories (9-12) of geopraphical items (1-8; 13-18) within an information terminal, **characterized by**

   selecting the items (1-8; 13-18) to be displayed, based on a distance (d) between an item (1-8; 13-18) to be displayed and a variable position of the information terminal, and based on a level of significance (s) of said item (1-8; 13-18) to be displayed, or
   selecting the categories (9-12) to be displayed, based on a distance (d) between an item of a category (9-12) to be displayed and a variable position of the information terminal, and based on a level of significance (s) of said category (9-12) to be displayed.

2. Method according to claim 1, **characterized by**
   selecting the category (9-12) to be displayed based on the distance (d) of an item of said category (9-12) to be displayed, which is located nearest to said variable position of said information terminal.

3. Method according to claim 1 or 2, **characterized by**
   appointing a zooming factor (Z) for displaying the geographical items (1-8; 13-18) or categories (9-12), whereas with a small zooming factor (Z) only items or categories having a high level of significance (s) located in a large area around the variable position of the information terminal are displayable, while with a large zooming factor (Z) items or categories having a small level of significance (s) located in a small area around the variable position of the information terminal are displayable.

4. Method according to claim 3, **characterized by**
   selecting the items (1-8; 13-18) or categories (9-12) to display based on a numerical order of all items or categories which is defined by a measure

$$m = f (Z, d, s)$$

   wherein m denotes the measure, Z denotes the zooming factor with $0 \leq Z \leq 1$, d denotes the distance between an item or categories and the variable position of the information terminal, and s denotes the level of significance, and wherein the items (1-8; 13-18) or categories (9-12) are selected to display in accordance with an increasing or decreasing value of the measure (m).

5. Method according to claim 4, **characterized by**
   determining the measure (m) according to the following equation:

$$m = Z*d + (1 - Z)*1/s.$$

6. Method according to anyone of the preceding claims, **characterized by**

   calculating the level of significance (s) of the items (1-8; 13-18) to be displayed based on at least one attribute of said item, wherein the attributes are stored by a system of said information terminal or along the item (1-8; 13-18) within a database of said item (1-8; 13-18); and/or calculating the level of significance (s) of the categories (9-12) to be displayed based on at least one attribute of said category, wherein the attributes are stored by a system of said information terminal or along the category (9-12) within a database of said category (9-12).

7. Method for displaying a limited number of a plurality of geographical items or categories of geopraphical items within an information terminal, **characterized by**

   visualizing a distance (d) between a variable position of the information terminal and either an item (1-8; 13-18) to be displayed or an item of a category (9-12) to be displayed, and visualizing a level of significance (s) of said item (1-8; 13-18) to be displayed or said category (9-12) to be displayed, wherein

both said distance (d) and said level of significance (s) are indicated by a position at which the item (1-8; 13-18) or the category (9-12) is shown on a display of said information terminal, whereas

a horizontal or vertical position indicates the distance (d) and a vertical or horizontal position indicates the level of significance (s).

**8.** Method according to claim 7, **characterized by**
indicating said distance (d) and/or said level of significance (s) only by an order of said item (1-8; 13-18) or said category (9-12) within a vertical or horizontal stack of items or categories.

**9.** Method according to claim 7 or 8, **characterized by**
indicating an exact value of said distance (d) and/or said level of significance (s) of said item (1-8; 13-18) or category (9-12) by using an additional text and/or graphics symbol shown on said display.

**10.** Method according to anyone of claims 7 to 9, **characterized by**
displaying an item (1-8; 13-18) or category (9-12) as a text entry wherein a horizontal position of said item or category is given by a vertical indentation of said text.

**11.** Method according to anyone of the claims 7 to 11, **characterized by**
selecting said geographical items and/or said categories of geographical items according to a method as defined in one of claims 1-6.

**12.** Method according to anyone of the preceding claims, **characterized by**
optionally scrolling to geographical items or categories currently not displayed within the information terminal or switching a complete screen of the information terminal to a next set of items or categories currently not displayed within the information terminal.

**13.** Method according to one of the preceding claims, **characterized in that**
the variable position of the information terminal is a current position.

**14.** Method according to claim 13, **characterized by**
continuously determining said current position of the information terminal for selecting an appropriate set of items (1-8; 13-18) or categories (9-12) to show on said display.

**15.** Method according to anyone of claims 1 to 12, **characterized in that**
the variable position of the information terminal is a selected position chosen by a user.

**16.** Information terminal for displaying a limited number of a plurality of geographical items or categories of geographical items, **characterized in that**

said information terminal comprises a display having a diagram in which
an entry assigned to a respective item (1-8; 13-18) to be displayed is indented with respect to at least one axis of the diagram in accordance with a distance (d) or its reciprocal between said respective item (1-8; 13-18) and a variable position of the information terminal and/or with respect to a level of significance (s) or its reciprocal of said respective item (1-8; 13-18); and/or in which
an entry assigned to a respective category (9-12) to be displayed is indented with respect to at least one axis of the diagram in accordance with a distance (d) or its reciprocal between an item of said respective category (9-12) and a variable position of the information terminal and/or with respect to a level of significance (s) or its reciprocal of said respective category (9-12).

**17.** Information terminal according to claim 16, **characterized in that**
said variable position of the information terminal is a current position being continuously determined or a selected position chosen by a user.

**18.** Information terminal according to claim 16 or 17, **characterized in that**
said entry is a text entry.

[ Distance d ]

$d_3$

far

$d_2$   A

$d_1$   B

near

significant          $s_1$      $s_2$          $s_3$    less significant

[ 1 / Significance s ]

**FIG. 1**

[ 1 / Distance d ]

near

    A ( 5 km )

    B ( 6 km )

    C ( 7 km )

far  D ( 100 km )

significant          less significant

[ 1 / Significance s ]

**FIG. 2**

**FIG. 3**

[ 1 / Distance d ]

near

Local museum (1 km) — 5

National gallery (3 km) — 6

National museum (20 km) — 7

Dali museum (50 km) — 8

far

significant      less significant

[ 1 / Significance s ]

**FIG. 4**

[ 1 / Distance d ]

near

Sightseeing (1 km) — 9

Transport (3 km) — 10

Restaurant (20 km) — 11

Hotel (50 km) — 12

far

significant      less significant

[ 1 / Significance s ]

[ 1 / Distance  d ]

near

ICE station Stuttgart (10 km) ~ 13

Airport Echterdingen (40 km) ~ 14

ICE station Karlsruhe (80  km) ~ 15

far

Airport Frankfurt (100 km) ~ 16

0.1

significant                    less significant

[ 1 / Significance s ]

**FIG. 5**

[ 1 / Distance d  ]

near

Subway station Höhenstraße (0 km) ~ 17

Tramway station Fellbach (2 km) ~ 18

ICE station Stuttgart (10 km) ~ 13

far

Airport Echterdingen (40 km) ~ 14

0.5

significant                    less significant

[ 1 / Significance s ]

**FIG. 6**

European Patent
Office

**EUROPEAN SEARCH REPORT**

Application Number

EP 00 12 4109

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X<br>A<br>Y | EP 0 720 003 A (AISIN AW CO)<br>3 July 1996 (1996-07-03)<br><br>* column 9, line 33 - line 35 *<br>* column 14, line 21 - line 31 *<br>* column 22, line 36 - line 48 *<br>* column 22, line 57 - line 58 *<br>* column 23, line 12 - line 16 *<br>* column 32, line 33 - column 33, line 9 *<br>* column 36, line 4 - line 5 *<br>--- | 1,13-15<br><br>7,16<br>6 | G01C21/36 |
| D,Y | US 5 987 375 A (TAMAI HARUHISA)<br>16 November 1999 (1999-11-16)<br>* column 4, line 39 - line 42 *<br>* column 6, line 19 - line 36 *<br>--- | 6 | |
| X | DE 196 14 940 A (BOSCH GMBH ROBERT)<br>23 October 1997 (1997-10-23)<br>* column 1, line 62 - column 2, line 4;<br>figure 1 *<br>----- | 1 | |
| | | | **TECHNICAL FIELDS SEARCHED (Int.Cl.7)**<br><br>G01C |

The present search report has been drawn up for all claims

| Place of search | Date of completion of the search | Examiner |
|---|---|---|
| THE HAGUE | 5 April 2001 | Hoekstra, F |

**ANNEX TO THE EUROPEAN SEARCH REPORT
ON EUROPEAN PATENT APPLICATION NO.**                    EP 00 12 4109

This annex lists the patent family members relating to the patent documents cited in the above–mentioned European search report.
The members are as contained in the European Patent Office EDP file on
The European Patent Office is in no way liable for these particulars which are merely given for the purpose of information.

05-04-2001

| Patent document cited in search report | | Publication date | Patent family member(s) | | Publication date |
|---|---|---|---|---|---|
| EP 0720003 | A | 03-07-1996 | JP | 8184455 A | 16-07-1996 |
| | | | JP | 2978088 B | 15-11-1999 |
| | | | JP | 9016077 A | 17-01-1997 |
| | | | US | 5850618 A | 15-12-1998 |
| US 5987375 | A | 16-11-1999 | US | 5819200 A | 06-10-1998 |
| | | | CA | 2217408 A | 07-04-1998 |
| | | | EP | 0834850 A | 08-04-1998 |
| | | | JP | 10115530 A | 06-05-1998 |
| | | | CA | 2196653 A | 15-08-1997 |
| | | | EP | 0790593 A | 20-08-1997 |
| | | | JP | 9229708 A | 05-09-1997 |
| | | | US | 5832408 A | 03-11-1998 |
| DE 19614940 | A | 23-10-1997 | WO | 9739310 A | 23-10-1997 |
| | | | EP | 0894242 A | 03-02-1999 |
| | | | JP | 2000512739 T | 26-09-2000 |

EPO FORM P0459

For more details about this annex : see Official Journal of the European Patent Office, No. 12/82